# EUROPÄISCHE PATENTSCHRIFT

(11) **EP 2 764 185 B1**
(45) Veröffentlichungstag und Bekanntmachung des Hinweises auf die Patenterteilung: **17.01.2018**
(21) Anmeldenummer: 12758793.9
(22) Anmeldetag: 23.08.2012
(51) Int. Cl.: F03D 13/20, E04H 12/12, E04H 12/16, E04H 12/34

(54) **VERFAHREN ZUM ERRICHTEN EINES TURMBAUWERKS SOWIE TURMBAUWERK**
METHOD FOR ERECTING A TOWER STRUCTURE, TOWER STRUCTURE
PROCÉDÉ DESTINÉ À CONSTRUIRE UN MÂT, MÂT AINSI OBTENU

(30) Priorität: 26.08.2011 DE 102011053017
(43) Veröffentlichungstag der Anmeldung: 13.08.2014
(73) Patentinhaber: Max Bögl Wind AG, 92369 Sengenthal (DE)
(72) Erfinder: BÖGL, Stefan, 92369 Sengenthal (DE)
(74) Vertreter: Bergmeier, Werner
(86) Internationale Anmeldenummer: PCT/EP2012/066397
(87) Internationale Veröffentlichungsnummer: WO 2013/030076

(56) Entgegenhaltungen:
- DE-A1-102009 002 248
- US-A1- 2011 138 707

## Beschreibung

Die vorliegende Erfindung betrifft ein Verfahren zum Herstellen eines Turmbauwerks, vorzugsweise eines Turmbauwerks einer Windkraftanlage, bei welchem in Fertigteilbauweise Betonringe aus ringförmigen oder ringsegmentförmigen Betonfertigteilen übereinander angeordnet und miteinander verbunden werden, sowie ein entsprechendes Turmbauwerk.

Im Stand der Technik sind eine Vielzahl verschiedener Verfahren zum Herstellen von Türmen für Windkraftanlagen in verschiedenen Bauweisen sowie verschiedenartig konstruierte Türme für Windkraftanlagen bekannt geworden. Beispielsweise wurden Türme sehr häufig als Stahlrohrtürme ausgeführt, wobei eine Vielzahl von Stahlrohrschüssen durch Schrauben miteinander verbunden werden. Derartige Türme können vergleichsweise günstig hergestellt werden, sind jedoch bezüglich ihrer Höhen begrenzt, da sie keine ausreichende Steifigkeit aufweisen. Bereits bei Türmen mit einer Höhe von 80 Metern kann es Probleme aufgrund der Biegeweichheit von Stahltürmen geben.

Um bei einem Stahlrohrturm, der aus mehreren Rohrschüssen zusammengesetzt ist, eine höhere Steifigkeit zu erreichen, schlägt die DE 101 44 167 C1 daher vor, die Rohrschüsse im unteren Bereich des Turms aus Gusseisen und nur im oberen Bereich aus Stahl herzustellen. Dies ermöglicht größere Wandstärken im unteren Bereich des Turms und hierdurch eine verbesserte Steifigkeit, sodass dieser Turm auch für Nabenhöhen von 100 Metern und darüber einsetzbar sein soll. Für die heute beispielsweise bei Windkraftanlagen geforderten Nabenhöhen von bis zu 150 Metern können derartige Türmen jedoch nicht in wirtschaftlicher Weise mit ausreichend hohen Eigenfrequenzen errichtet werden.

Es ist daher üblich, Turmbauwerke größerer Windkraftanlagen als Spannbetontürme auszuführen, wobei die Türme in Ortbeton oder in Fertigteilbauweise hergestellt werden. Um sehr große Nabenhöhen vergleichsweise kostengünstig erreichen zu können, sind im Stand der Technik weiterhin Hybridtürme mit einem ersten Turmabschnitt aus Beton mit einem zweiten darauf aufgesetzten Stahlmast etabliert.

Die EP 1 474 579 A1 beschreibt einen Hybridturm in Fertigteilbauweise, wobei ringförmige Betonfertigteile auf einem Fundament übereinander gesetzt und miteinander verbunden werden. Hierbei kommen je nach Ausführung des Turms zylindrische oder auch konisch zulaufende Betonringe zum Einsatz. Ein derartiger Turm kann durch die Fertigteilbauweise weitgehend witterungsunabhängig vorgefertigt werden und am Montageort schnell aufgebaut werden. Dies ermöglicht eine wirtschaftliche Herstellung der Türme, lässt jedoch keinerlei flexible Anpassungen bezüglich der Abmessungen wie Turmhöhe und Durchmesser zu. Ebenso ist keine Anpassung an Gegebenheiten am Standort wie die Bodenverhältnisse oder die Gründung des Turmbauwerks möglich.

Die DE 10 2009 002 248 A1 befasst sich mit der Errichtung einer Off-Shore-Anlage aus ringförmigen Betonfertigteilen. Dabei können für einen Sockel der Off-Shore-Anlage, der auch ein ballastierbares Fundament enthält, andere Betonfertigteile vorgesehen werden als für einen auf dem Sockel errichteten Aufbau. Auch hier ermöglicht die Fertigteilbauweise eine wirtschaftliche Herstellung der Anlage. Die DE 10 2009 002 248 A1beschreibt jedoch ebenfalls nicht, auf welche Weise die Off-Shore-Anlage an verschiedene Gegebenheiten angepasst werden könnte.

Aufgabe der vorliegenden Erfindung ist es, ein Verfahren zum Errichten eines Turmbauwerks, einen Bausatz und ein Turmbauwerk vorzuschlagen, welche die Einhaltung der Eigenfrequenzanforderungen bei verschiedenen Abmessungen und Standortgegebenheiten ermöglichen.

Die Aufgabe wird gelöst mit den Merkmalen der unabhängigen Ansprüche.

Bei einem Verfahren zum Herstellen eines Turmbauwerks, vorzugsweise eines Turmbauwerks einer Windkraftanlage, werden in Fertigteilbauweise Betonringe aus ringförmigen oder ringsegmentförmigen Betonfertigteilen übereinander angeordnet und miteinander verbunden. Die ringförmigen oder ringsegmentförmigen Betonfertigteile weisen dabei zumindest teilweise unterschiedliche Durchmesser auf und werden stets mit nach oben hin abnehmendem Durchmesser aufeinander angeordnet. Erfindungsgemäß wird das Turmbauwerk aus einem Bausatz aufgebaut, welcher drei verschiedenartig geformte Betonringe beinhaltet. Dabei wird zunächst ein Fußabschnitt aus wenigstens einem stark konischen Betonring aufgebaut wird und auf dem Fußabschnitt wird zumindest ein oberer Abschnitt aus einer Mehrzahl schwach konischer Betonringe gleicher Konizität und unterschiedlichen Durchmessers und wenigstens einem zylindrischen Betonring aufgebaut. Ein erfindungsgemäßes Turmbauwerk ist dadurch gekennzeichnet, dass es aus drei verschiedenartig geformten Betonringen aufgebaut ist, wobei ein Fußabschnitt aus zumindest einem stark konischen Betonring aufgebaut ist und wobei auf dem Fußabschnitt zumindest ein oberer Abschnitt aus einer Anzahl mehrerer schwach konischer Betonringe gleicher Konizität und unterschiedlichen Durchmessers und wenigstens einem zylindrischen Betonring aufgebaut ist. Ebenso umfasst ein erfindungsgemäßer Bausatz zur Herstellung eines Turmbauwerks mindestens einen stark konischen Betonring, eine Anzahl mehrerer schwach konischer Betonringe unterschiedlicher, aufeinander abgestimmter Durchmesser und gleicher Konizität sowie wenigstens einen zylindrischen Betonring.

Nach der vorliegenden Erfindung ist somit vorgesehen, ein Turmbauwerk einer Windkraftanlage stets aus drei unterschiedlich geformten Betonringen bzw. Betonfertigteilen herzustellen, welche nach Art eines Baukastensystems in unterschiedlicher Weise miteinander kombiniert werden können, wobei jedoch jedes Turmbauwerk durch den wenigstens einen stark konischen Betonring einen im Wesentlichen parabelförmigen Fußabschnitt sowie einen oberen Abschnitt aufweist, der aus konischen und zylindrischen Betonringen besteht. Der wenigstens eine stark konische Betonring weist hierbei vorzugsweise einen Durchmesserzuwachs bzw. eine Konizität von mindestens 1,9° bis 6,5° auf, während die schwach konischen Betonringe eine Konizität von ca. 1°, beispielsweise 1,146° aufweisen. Die Konizität des zumindest einen stark konischen Betonrings beträgt zumindest das 1,6-fache der Konizität der schwach konischen Betonringe. Durch einen oder mehrere stark konischen Betonringe kann bedingt durch den hohen Durchmesserzuwachs auf kurzer Höhe ein näherungsweise parabelförmiger Fußabschnitt bei einem Turmbauwerk in Fertigteilbauweise bereit gestellt werden. Hierdurch kann im Gegensatz zu Türmen des Stands der Technik in Fertigteilbauweise eine ausreichende Eigenfrequenz des Turms ohne weitere Maßnahmen bereits durch die Geometrie des Turmbauwerks sichergestellt werden. Das zumindest eine stark konische Betonelement im Fußabschnitt des Turms ermöglicht es hierbei, selbst bei schlanken Turmbauwerken einen vergleichsweise großen Fußdurchmesser im Fußabschnitt des Turmbauwerks zu erreichen, so dass die Einhaltung der Eigenfrequenzanforderung sicher gestellt ist, während durch die Zusammenstellung aus verschieden geformten Betonringen flexible Abmessungen ermöglicht werden.
Die Anzahl schwach konischer Betonringe stellt dabei durch die gleiche Konizität und die aufeinander folgenden Durchmesser eine vergleichsweise hohe Grundsteifigkeit des Turmbauwerks sicher, wobei durch die stark konisch geformten Betonringe und die zylindrischen Betonringe weitreichende Modulationen der Steifigkeit erzielt werden können. Es können somit durch das Vorsehen unterschiedlich geformter Betonringe je nach Standort, Nabenhöhe und Leistung der Anlage unterschiedliche Auslegungskonzepte hinsichtlich der Eigenfrequenzanforderungen verfolgt werden. Die Durchmesser der Betonringe, insbesondere ein Fußdurchmesser des oder der stark konischen Betonringe und ein Durchmesser des oder der zylindrischen Betonringe werden hierbei vorteilhafterweise derart aufeinander abgestimmt, dass auch bei verschiedenen Bauhöhen des Turmbauwerks die Anforderungen an die Eigenfrequenzen ohne weitere Maßnahmen erfüllt sind. Das Turmbauwerk weist somit auch bei verschiedenen Bauhöhen, beispielsweise bei mehreren aufgesetzten zylindrischen Betonringen oder beim Aufsetzen eines zusätzlichen Stahlmastes, eine ausreichende Eigenfrequenz auf und ist somit flexibel einsetzbar. Durch den erfindungsgemäßen modularen Aufbau des Turmbauwerks ist es möglich, die einzelnen Fertigteile bzw. Betonringe des Turmbauwerks in wirtschaftlicher Weise im Fertigteilwerk herzustellen, wobei dennoch durch unterschiedliche Kombinationen der vorgefertigten Betonringe flexible Anpassungen möglich sind.

Insbesondere ist es vorteilhaft, wenn bei dem Verfahren zum Herstellen eines Turmbauwerks ein erster Satz schwach konischer Betonringe verschiedener, aufeinander abgestimmter Durchmesser und gleicher Konizität, ein zweiter Satz stark konischer Betonringe verschiedener, aufeinander abgestimmter Durchmesser und unterschiedlicher Konizitäten sowie ein dritter Satz zylindrischer Betonringe verschiedenen oder auch gleichen Durchmessers gefertigt werden. Der Bausatz zum Herstellen des Turmbauwerks umfasst dem gemäß einen ersten Satz konischer schwach Betonringe gleicher Konizität und verschiedener, aufeinander abgestimmter Durchmesser, einen zweiten Satz stark konischer Betonringe verschiedener, aufeinander abgestimmter Durchmesser und unterschiedlicher Konizität sowie zumindest einen Satz zylindrischer Betonringe gleichen oder auch verschiedenen Durchmessers.

Zum Aufbauen des Turms am Montageort wird dann in Abhängigkeit von der geplanten Bauhöhe und der geplanten Steifigkeit bzw. den Anforderungen an die Eigenfrequenzen des Turmbauwerks die Anzahl und/oder die Anordnung der Betonringe in jedem Abschnitt festgelegt. Durch eine entsprechende Auswahl eines oder mehrerer stark konischer Betonringe ist eine schnelle Durchmesservergrößerung zum Fußbereich hin möglich. Die stark konischen Betonringe unter schiedlicher Konizität werden hierbei derart im Fußbereich angeordnet, dass die Konizität des Turmbauwerkes im Fußabschnitt nach unten hin stufenweise stark zunimmt und somit ein näherungsweise parabelförmiger Fußabschnitt erstellt wird. Der wenigstens eine zylindrische Betonring ermöglicht auch bei verschiedenartig aus dem Bausatz zusammengestellten Türmen die Ausführung eines einheitlichen Kopfabschnitts, auf welchen dann ein weiterer Abschnitt aus ebenfalls auf die Betonringe des Bausatzes abgestimmten Stahlsegmenten aufsetzbar ist. Es können somit durch unterschiedliche Auswahl und Anordnung von stark konischen, schwach konischen und zylindrischen Betonringen Turmbauwerke unterschiedlicher Abmessungen und Eigenfrequenzen in Fertigteilbauweise erstellt werden. Trotz dieser Flexibilität ist die Anzahl der verschiedenen Fertigteile und somit der benötigten Schalungen vergleichsweise gering, so dass eine wirtschaftliche Herstellung der Fertigteile und Türme möglich ist.

Insbesondere kann durch die Anzahl und Anordnung der schwach konischen Betonringe und der zylindrischen Betonringe in dem wenigstens einen oberen Abschnitt eine Vielzahl unterschiedlicher Turmbauwerke aus stets dem gleichen Bausatz hergestellt werden, welcher eine feste Anzahl aufeinander abgestimmter schwach konischer Betonringe beinhaltet. Das Turmbauwerk ist somit in dem oberen Abschnitt stets aus dem vollständigen Satz konischer Betonringe aufgebaut. Es hat sich dabei als vorteilhaft herausgestellt, wenn der vollständige Satz schwach konischer Betonringe eine feste Anzahl von sieben im Durchmesser aufeinander abgestimmten Betonringen aufweist. Da in jedem Turmbauwerk auch bei unterschiedlichen Abmessungen der vollständige Satz schwach konischer Betonringe zum Einsatz kommt, können die schwach konischen Betonringe ebenso wie die zylindrischen Betonringe in kostengünstiger Weise in großen Stückzahlen hergestellt werden. Somit können auch verschiedenste Türme verschiedenster Abmessungen und Steifigkeiten kostengünstig hergestellt werden. Die Anzahl der stark konischen Betonringe im Fußabschnitt wird entsprechend den Anforderungen des herzustellenden Turmbauwerks an die erste Eigenfrequenz festgelegt und der im Wesentlichen parabelförmige Fußabschnitt aus diesen Betonringen aufgebaut. Ebenso ist es jedoch möglich, die Bauhöhe des Turms zu variieren, indem eine entsprechende Anzahl stark konischer Betonringe ausgewählt und im Fußabschnitt des Turmes verbaut wird. Bei der Turmerhöhung durch stark konische Betonringe im Fußbereich ist wiederum die Einhaltung der Anforderung an die erste Eigenfrequenzen stets sichergestellt. Somit kann ein steiferer Turm in einfacher Weise dadurch erzielt werden, dass ein weiterer stark konischer Betonring unterhalb des ersten stark konischen Betonrings im Fußabschnitt angeordnet wird.

Besonders vorteilhaft ist es, wenn die unterschiedlich geformten Betonringe derart aufeinander abgestimmt werden und aufeinander angeordnet werden, dass ein Knickwinkel zwischen zwei benachbarten Betonringen stets weniger als 2° beträgt. Hierdurch wird die Führung und das Spannen der Spannglieder erleichtert. Zudem kann ein gefälligeres Erscheinungsbild erreicht werden.

Weiterhin ist es vorteilhaft, wenn entsprechend der gewünschten Bauhöhe des Turmbauwerks die Anzahl der zylindrischen Betonringe festgelegt wird und der obere Abschnitt aus dem vollständigen Satz schwach konischer Betonringe und der festgelegten Anzahl zylindrischer Betonringe aufgebaut wird. Die Einstellung der Bauhöhe des Turmbauwerks erfolgt also über die Anzahl der zylindrischen Betonringe, welche in günstiger Weise als Gleichteile hergestellt und aufgrund ihrer geringeren Abmessungen in einfacher Weise transportiert werden können. Die Einhaltung der Eigenfrequenzanforderung ist hierbei wiederum durch ein oder mehrere stark konische Betonelemente im Fußabschnitt sichergestellt.

Ebenso kann es jedoch vorteilhaft sein, wenn zylindrische Betonringe eines weiteren Durchmessers gefertigt werden und das Turmbauwerk im oberen Abschnitt zusätzlich aus zumindest einem zylindrischen Betonring des weiteren Durchmessers und aus einer Teilanzahl aus dem ersten Satz schwach konischer Betonringe aufgebaut wird. Dies ermöglicht weitere Einflussmöglichkeiten auf die Eigenfrequenzen des Turmbauwerks, wobei dennoch eine wirtschaftliche Herstellung des Turms möglich ist. Die Anpassung an die zylindrischen Betonringe der verschiedenen Durchmesser kann in einfacher Weise durch das Weglassen oder Aufsetzen eines konischen Betonrings erfolgen. Aufgrund der Abstimmung der verschieden geformten Betonringe aufeinander bleiben auch bei verschiedenen Modifikationen der Turmbauwerke ausreichende Eigenfrequenzen gewahrt.

Weiterhin ist es vorteilhaft, wenn das Turmbauwerk in dem oberen Abschnitt aus dem vollständigen Satz schwach konischer Betonringe aufgebaut wird und die Einstellung der Steifigkeit, insbesondere der zweiten Eigenfrequenz, des Turmbauwerks entsprechend der geplanten Steifigkeit durch die Anzahl und Anordnung zylindrischer Betonringe in dem oberen Abschnitt erfolgt. Aus oben genannten Gründen der vorteilhaften Herstellung und Montage der zylindrischen Betonringe ist eine Variation der Bauhöhe und insbesondere der zweiten Eigenfrequenz durch die Anzahl der zylindrischen Betonringe in besonders einfacher Weise möglich.

Bei einem Hybridturm ist es weiterhin in vorteilhafter Weise möglich, durch das Vorsehen mehrerer zylindrischer Betonringe die Anzahl bzw. die Höhe des oder der aufgesetzten Stahlrohrsegmente zu verringern und hierdurch bei gleicher Bauhöhe einen steiferen Turm bereit zu stellen.

Nach einer vorteilhaften Ausführungsform der Erfindung werden auf dem im Wesentlichen parabelförmigen Fußabschnitt wenigstens ein im Wesentlichen konischer Abschnitt aus einer Mehrzahl, insbesondere dem vollständigen Satz, schwach konischer Betonringe und wenigstens ein zylindrischer Abschnitt aus zumindest einem zylindrischen Betonring als obere Abschnitte aufgebaut. Durch die Anordnung eines zylindrischen Abschnitts auf dem konischen Abschnitt aus dem vollständigen Satz schwach konischer Betonringe kann in einfacher Weise die Höhe des Turmbauwerks eingestellt werden.

Nach einer anderen Ausführung ist es hingegen vorteilhaft, wenn wenigstens ein zylindrischer Abschnitt aus wenigstens einem zylindrischen Betonring zwischen zwei konischen Abschnitten angeordnet wird. Die konischen Abschnitte beinhalten dabei zusammen wiederum den vollständigen Satz schwach konischer Betonringe, beispielsweise aus sieben Betonringen. Durch das Einsetzen zylindrischer Abschnitte oder auch nur einzelner zylindrischer Ringe verschiedenen Durchmessers an unterschiedlichen Stellen des Satzes konischer Betonringe und somit an unterschiedlicher Höhe des Turmbauwerks kann bei größeren Bauhöhen des Turmbauwerks ein ungünstiger Durchmessersprung und eine schnelle Durchmesserabnahme nach oben hin vermieden werden. Mit dem gleichen Bausatz können somit auch sehr hohe Turmbauwerke errichtet werden, wobei durch die Anordnung zylindrischer Abschnitte bzw. Betonringe innerhalb des Satzes konischer Betonringe noch eine vorteilhafte Steifigkeit erreicht werden kann, welche im Nennbetrieb oberhalb der Rotorfrequenz liegt. Wird die Höhe des Turmbauwerks durch die Anordnung zylindrischer Betonringe zwischen zwei konischen Abschnitten eingestellt, so kann dabei im Vergleich zu einem auf den vollständigen Satz schwach konischer Betonringe aufgesetzten zylindrischen Abschnitt eine wesentlich höhere erste Biegeeigenfrequenz erzielt werden.

Nach einer Weiterbildung der Erfindung weisen die stark konischen, zylindrischen und schwach konischen Betonringe die gleiche Höhe und/oder die gleiche Wandstärke auf. Sowohl die Fertigung wie auch die Montage der verschiedenen Betonringe übereinander ist hierdurch erleichtert.

Nach einer vorteilhaften Weiterbildung der Erfindung wird nach dem Aufbau des gesamten oberen Abschnitts ein Spannstück aufgesetzt und es erfolgt eine Verbindung der Betonringe, indem diese durch externe Spannglieder miteinander verbunden werden. Bei einem Turmbauwerk sind die Betonringe durch vorzugsweise externe Spannglieder miteinander verbunden. Die externe Vorspannung ist hierbei besonders vorteilhaft, da sie bezüglich der Anzahl der eingesetzten Betonringe eine große Variabilität aufweist, da keine entsprechenden Öffnungen für Spannkanäle vorgesehen und zueinander ausgerichtet werden müssen. Nach einer weiteren Ausführungsform kann dabei auch eine Zwischenabspannung vorgesehen werden, wobei nach dem Aufbau eines Teilabschnitts des oberen Abschnitts, also zylindrischen Abschnitts oder eines konischen Abschnitts, bereits ein Spannstück aufgesetzt wird und die bereits aufgebauten Betonringe durch externe Spannglieder miteinander verbunden werden. Durch das Vorsehen derartiger Zwischenabspannungen kann die Steifigkeit des Turmbauwerks noch weiter verbessert werden.

Nach einer weiteren vorteilhaften Ausführungsform der Erfindung ist das Turmbauwerk als Hybridturm ausgebildet und weist ein oder mehrere rohrförmige Stahlsegmente oberhalb des oberen Abschnitts auf. Die Steifigkeit des gesamten Turms wird hierbei durch einen oder mehrere stark konische Betonringe im Fußabschnitt bzw. den Aufbau des Turmbauwerks aus konischen und zylindrischen Betonringen gewährleistet, während durch das Aufsetzen eines oder mehrerer Stahlsegmente in kostengünstiger Weise große Nabenhöhen erreicht werden können.

Weiterhin ist es vorteilhaft, wenn die stark konischen Betonringe des Fußabschnitts und/oder die konischen Betonringe des oberen Abschnitts aus zwei oder mehreren ringsegmentförmigen Betonfertigteilen zusammengesetzt sind. Die Herstellung und der Transport der Betonfertigteile zum Montageort ist hierdurch auch bei sehr großen Durchmessern in günstiger Weise möglich. Das Zusammensetzen der Betonfertigteile kann dann am Montageort erfolgen. Eine wirtschaftliche Fertigung der zylindrischen Betonringe ist möglich, wenn diese aus einem einzigen ringförmigen Betonfertigteil gefertigt werden.

Daneben ist es vorteilhaft, wenn in die Betonringe und/oder die Betonfertigteile Hüllrohre beispielsweise aus Kunststoff als Montagehilfen eingegossen sind. Nach der Montage können die Hüllrohre genutzt werden, um Stromleitungen geschützt in deren Innerem durch das Turmbauwerk zu führen.

Weitere Vorteile der Erfindung werden anhand der nachfolgend dargestellten Ausführungsbeispiele beschrieben. Es zeigen:
- **Fig. 1**: ein erfindungsgemäßes Turmbauwerk in einer teilweise geschnittenen Übersichtsdarstellung, welches als Hybridturm ausgeführt ist,
- **Fig. 2**: ein erfindungsgemäßes Turmbauwerk, welches als Betonturm ausgeführt ist,
- **Fig. 3**: ein weitere Ausführungsform eines erfindungsgemäßen Turmbauwerks,
- **Fig. 4**: einen Betonring, welcher aus ringsegmentförmigen Betonfertigteilen zusammengesetzt ist,
- **Fig. 5**: eine schematische Schnittdarstellung eines Betonfertigteils mit Hüllrohren als Montagehilfe, sowie
- **Fig. 6 und 7**: weitere alternative Ausführungsformen eines erfindungsgemäßen Turmbauwerks.

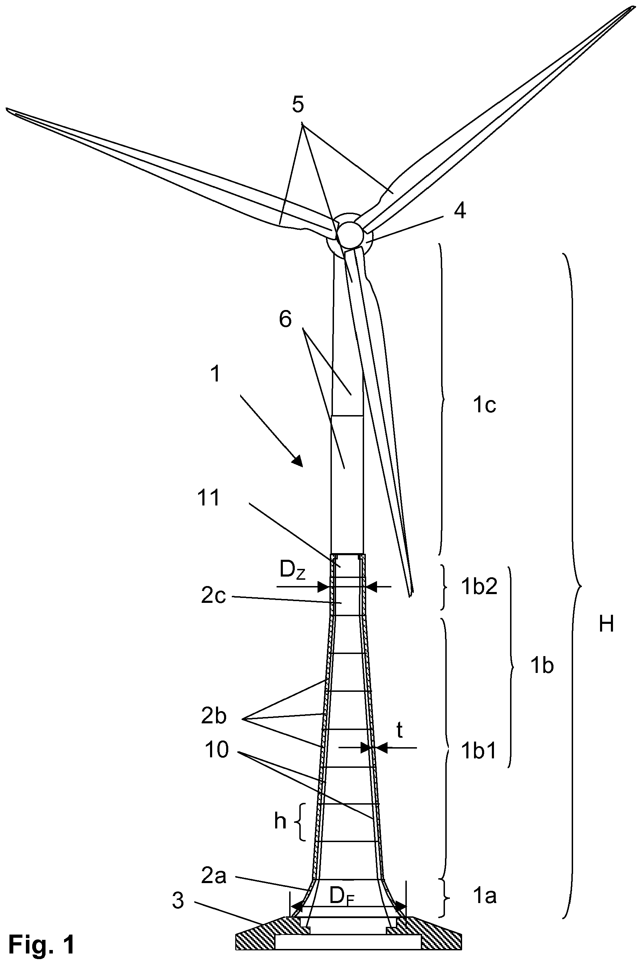

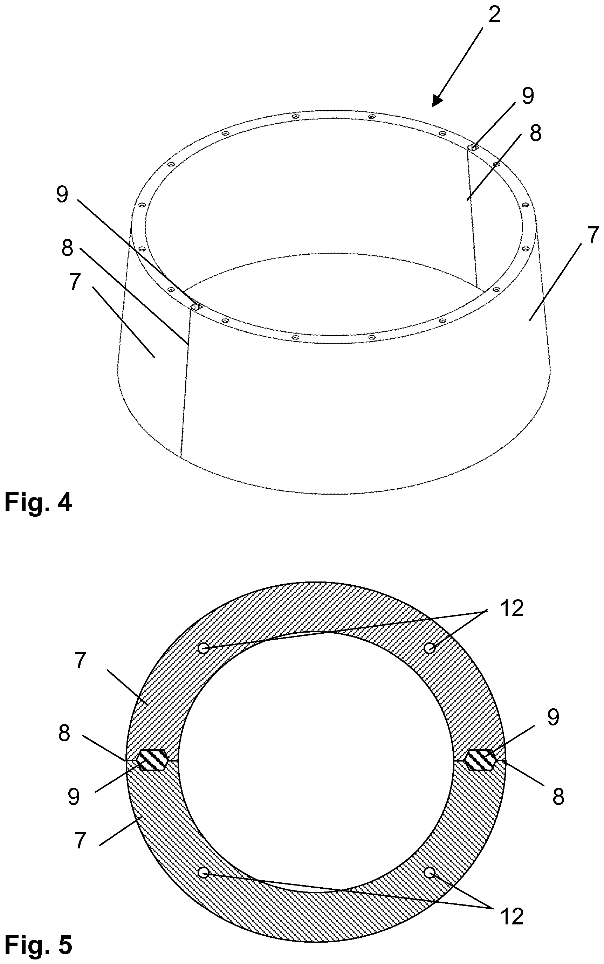

Figur 1 zeigt ein erfindungsgemäßes Turmbauwerk 1, welches in Fertigteilbauweise aus übereinander angeordneten und miteinander verbundenen Betonringen 2 aufgebaut ist. Die Betonringe 2 können hierbei einteilig als Betonfertigteile 7 oder auch aus zwei oder mehreren ringsegmentförmigen Betonfertigteilen 7 zusammengesetzt sein, wie in Figur 4 ersichtlich. Nach dem Wesen der Erfindung ist vorgesehen, dass das Turmbauwerk 1 einen im Wesentlichen parabelförmigen Fußabschnitt 1a aus wenigstens einem stark konischen Betonring 2a aufweist, sowie einen oberen Abschnitt 1b, der aus mehreren konischen Betonringen 2b sowie wenigstens einem zylindrischen Betonring 2c aufgebaut ist. Nach der vorliegenden Darstellung besteht das Turmbauwerk 1 aus mehreren konischen Betonringen 2b, jedoch nur einem zylindrischen Betonring 2c im oberen Abschnitt 1b. und aus nur einem stark konischen Betonring 2a im Fußabschnitt 1a. Aufgrund des starken Durchmesserzuwachses des einen stark konischen Betonrings 2a nach unten hin wird hierbei ein näherungsweise parabelförmiger Fußabschnitt 1a erreicht.

Vorliegend ist das Turmbauwerk 1 als Hybridturm ausgebildet und weist oberhalb des oberen Abschnitts 1b einen weiteren Abschnitt 1c aus Stahlsegmenten 6 auf. Zur Verbindung der Stahlsegmente 6 mit dem oberen Abschnitt 1b ist vorliegend ein spezielles Adapterstück vorgesehen, welches zugleich als Spannstück 11 zur Festlegung externer Spannglieder 10 dient. Auf der Turmspitze bzw. vorliegend dem obersten Stahlsegment 6 werden schließlich die Funktionsbauteile wie die Gondel 4 mit Rotor und Rotorblättern 5, sowie der Triebstrang montiert. Das Turmbauwerk 1 ist mit seinem Fußabschnitt 1a auf einem Fundament 3 aufgestellt.

Im Betrieb sind Turmbauwerke 1 für Windkraftanlagen bedingt durch verschiedenste Anregungsfrequenzen großen dynamischen Belastungen ausgesetzt. Um Resonanzerscheinungen durch die verschiedenen Anregungsfrequenzen zu vermeiden, müssen die Turmbauwerke 1 mit ausreichend hohen Eigensteifigkeiten ausgelegt werden, wozu verschiedenste Richtlinien existieren. Hierbei ist zu beachten, dass die Eigenfrequenzen nicht nur von der Steifigkeit der Konstruktion des Turmbauwerks 1 selbst, sondern auch von dem Fundament 3 bzw. der Verbindung des Turmbauwerks 1 mit dem Fundament 3 abhängt. In der Regel ist daher abhängig von den Belastungen des Turmbauwerks 1 insbesondere durch Wind sowie die periodische Anregung durch Rotor und Rotorblätter für jedes einzelne Turmbauwerk 1 der Nachweis über die Einhaltung ausreichender Eigenfrequenzen zu führen. Demgegenüber stehen die Bemühungen, ein Turmbauwerk 1 mit den geringst möglichen Dimensionen zu erhalten, da neben dem Materialverbrauch insbesondere bei der Fertigteilbauweise auch der Transport vom Aufstellort sowie das Handling der einzelnen Betonfertigteile mit zunehmenden Abmessungen und Gewichten schwieriger wird und erhebliche Kosten verursacht.

Das erfindungsgemäße Turmbauwerk 1 weist bedingt durch seine Geometrie mit einem im Wesentlichen parabelförmigen Fußabschnitt 1a und einem oberen Abschnitt 1b, der einen unteren konischen Abschnitt 1b1 und darauf aufgesetzt einen zylindrischen Abschnitt 1b2 beinhaltet, eine hervorragende Eigensteifigkeit auf, welche auch die Einhaltung einer Anforderung für die erste Eigenfrequenz oberhalb der Rotorfrequenz sicherstellt. Durch den stark konischen Betonring 2a kann erreicht werden, dass ein sehr großer Durchmesser und eine günstige Massenverteilung im Fußbereich 1a des Turmbauwerks 1 erzielt wird, welche bei ansonsten schlanker Turmkonstruktion eine höhere Eigenfrequenz des Turmbauwerks 1 bewirkt.

Zur Herstellung des Turmbauwerks 1 ist nach der vorliegenden Erfindung ein Bausatz vorgesehen, welcher Betonringe 2 aus ringförmigen oder ringsegmentförmigen Betonfertigteilen 7 umfasst. Die Durchmesser der verschieden geformten Betonringe 2 sind hierbei derart aufeinander abgestimmt, dass der zumindest eine stark konische Betonring 2a einen im Wesentlichen parabelförmigen Fußabschnitt 1a des Betonbauwerks 1 bildet, die schwach konischen Betonringe 2b einen konischen Abschnitt 1b1 und der zumindest eine zylindrische Betonring 2c einen zylindrischen Abschnitt 1b2 des Turmbauwerks 1 bildet.

Um eine verbesserte Anpassung des Turmbauwerks 1 an verschiedene Einbauorte bzw. verschiedene Bauhöhen H zu ermöglichen, beinhaltet der Bausatz bevorzugt mehrere stark konische Betonringe 2a unterschiedlicher Konizität. Weiterhin ist es vorteilhaft, wenn mehrere zylindrische Betonringe 2c, vorzugsweise auch mehrere zylindrische Betonringe 2c verschiedenen Durchmessers, vorgesehen sind. Mit einem derartigen Bausatz ist es nun in vorteilhafter Weise möglich, je nach Aufstellort, Höhe und Belastung der Windkraftanlage ein Turmbauwerk 1 verschiedenster Bauhöhen H herzustellen, indem jeweils eine entsprechende Anzahl zylindrischer Betonringe 2c im oberen Abschnitt 1b des Turmbauwerks 1 sowie stark konischer Betonringe 2a im Fußabschnitt 1a vorgesehen wird.

Die Abmessungen des zumindest einen stark konischen Rings 2a sowie der zylindrischen Ringe 2c, sind hierbei derart aufeinander abgestimmt, dass auch bei der Anordnung mehrerer zylindrischer Betonringe 2c gleichen Durchmessers D_{z} zumindest die Minimalanforderungen an die Eigenfrequenzen des Turmbauwerks 1 erfüllt sind. Es ist somit möglich, bei minimalem Basisdurchmesser des Fußabschnitts 1a Turmbauwerke 1 unterschiedlicher Höhe H herzustellen. Die Minimalanforderung beinhaltet hierbei beispielsweise, dass die erste Eigenfrequenz oberhalb der einfachen Rotordrehzahl liegt, welche eine der wichtigsten Anregungsfrequenzen darstellt. Es kann jedoch als Mindestanforderung auch vorgesehen werden, dass beim Hochlaufen des Rotors die Rotorfrequenz durchlaufen wird. Ist hingegen eine noch steifere Konstruktion des Turmbauwerks 1 erwünscht, welche auch oberhalb weiterer Anregungsfrequenzen liegt, so kann aus dem Satz stark konischer Betonringe 2a eine geeignete Anzahl ausgewählt werden und das Turmbauwerk im Fußabschnitt 1a aus der gewählten Anzahl stark konischer Betonringe 2a errichtet werden. Die unterschiedlich stark konischen Betonringe 2a werden hierbei mit nach unten hin zunehmender Konizität angeordnet.

Ebenso ist es in vorteilhafter und besonders einfacher Weise möglich, die Bauhöhe H des Turmbauwerks 1 durch die Anzahl zylindrischer Betonringe 2c im oberen Abschnitt 1b des Turmbauwerks 1 zu variieren. Es hat sich gezeigt, dass durch eine unterschiedliche Anzahl zylindrischer Betonringe 2c im oberen Abschnitt 1b des Turmbauwerks 1 insbesondere die zweite Eigenfrequenz des Turmbauwerks 1 beeinflusst werden kann.

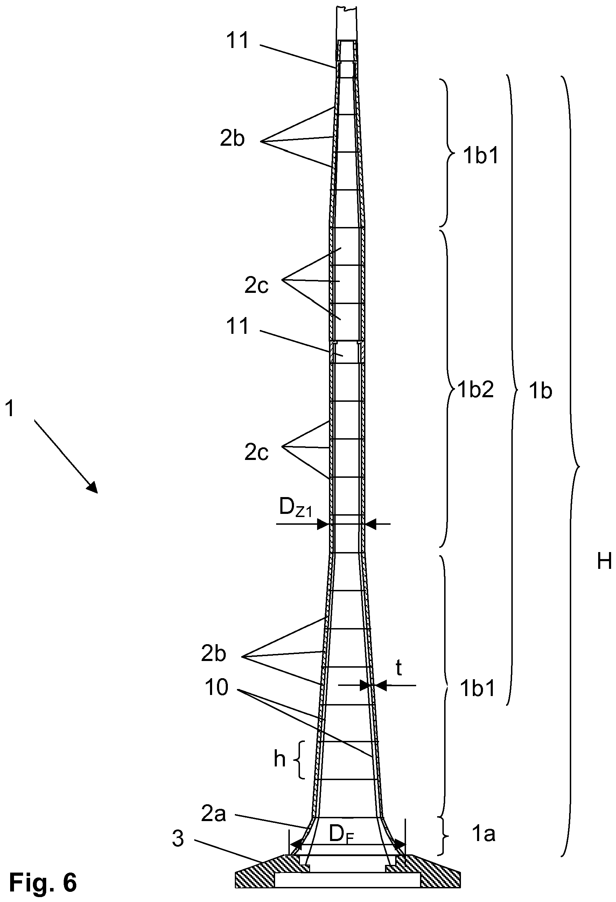

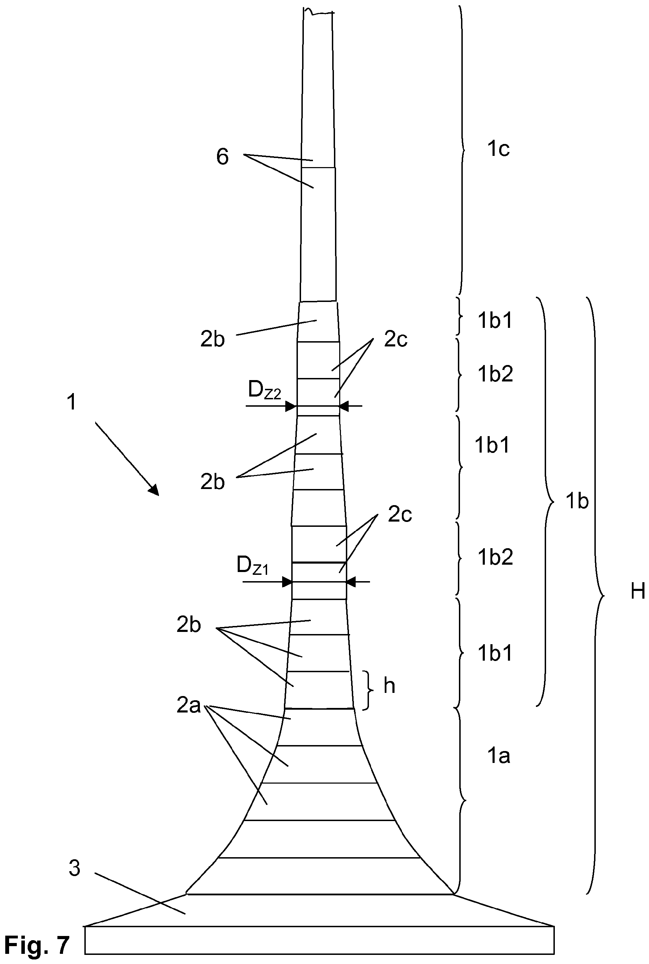

Es ist somit bei vergleichsweise geringer Wanddicke t und entsprechender vorteilhafter Material- und Gewichtsersparnis auch möglich, durch das Aufsetzen eines zylindrischen Abschnitts 1b2 aus mehreren zylindrischen Betonringen 2c ein Turmbauwerk 1 beliebiger Bauhöhen H entsprechend der Eigenfrequenzanforderungen herzustellen. Durch die Anordnung eines oder mehrerer zylindrischer Abschnitte 1b2 zwischen zwei konischen Abschnitten 1b1, wie in den Figuren 6 und 7 gezeigt, können dabei aus dem gleichen Bausatz verschiedene Turmbauwerke 1 errichtet werden, welche auch bei großen Bauhöhen H eine ausreichende Steifigkeit aufweisen. Bei Anordnung mehrerer zylindrischer Betonringe 2c kann dabei bei großer Bauhöhe noch eine erste Eigenfrequenz erreicht werden, welche beim Hochfahren der Anlage durch die Rotoranregung durchlaufen wird, im Nennbetrieb aber unterhalb der Rotorfrequenz liegt.

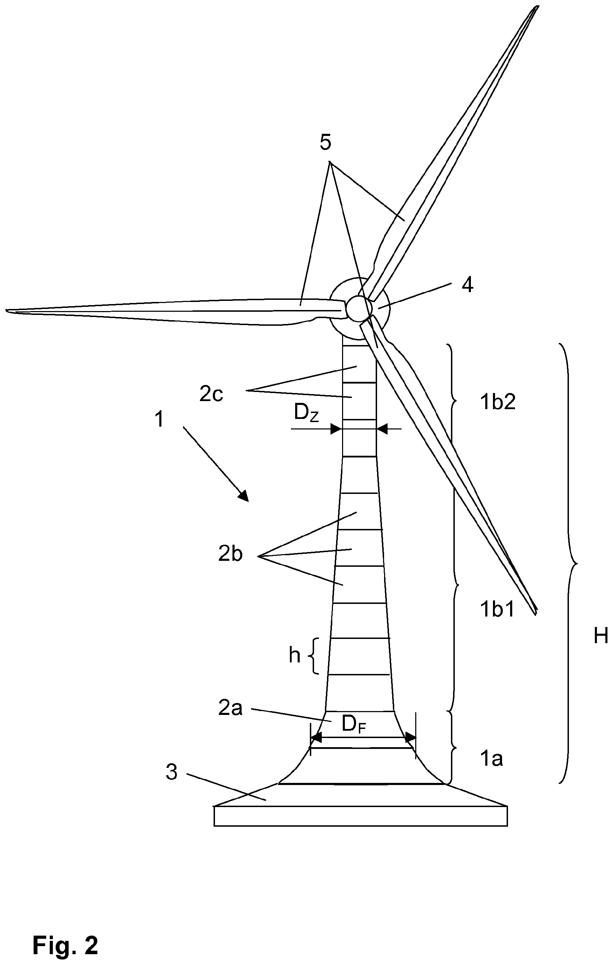

Figur 2 zeigt eine andere Ausführung eines Turmbauwerks, welches aus mehreren stark konischen Betonringen 2a und mehreren zylinderförmigen Betonringen 2c aufgebaut ist. Der obere Abschnitt 1b ist hingegen ebenso wie der in Figur 1 gezeigte aus dem vollständigen Satz konischer Betonringe 2b aufgebaut, welche wiederum einen konischen Abschnitt 1b1 bilden, wobei jedoch oberhalb des einen konischen Abschnitts 1b1 ein zylindrischer Abschnitt 1b2 aus mehreren zylindrischen Betonringen 2c angeordnet ist.

Wie in Figur 1 weiterhin ersichtlich, werden nach dem Aufbau des oberen Abschnitts 1b die Betonringe 2a, 2b und 2c durch Spannglieder 10, vorliegend durch externe Spannglieder 10 miteinander verbunden. Es ist hierdurch nicht erforderlich, für jedes Turmbauwerk 1 ein unterschiedliches Spannsystem vorzusehen.

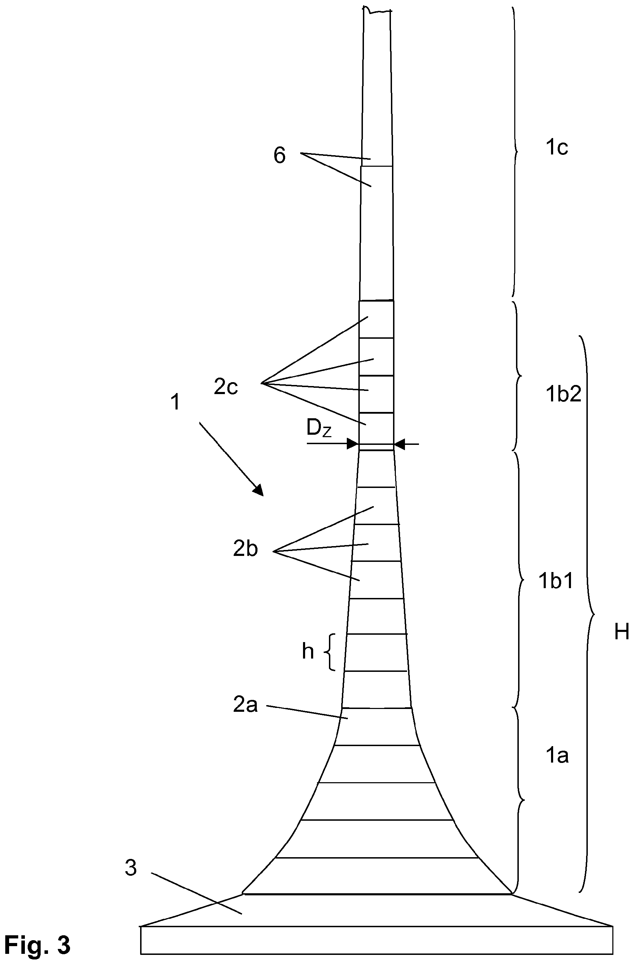

Figur 3 zeigt eine weitere Ausführungsform eines erfindungsgemäßen Turmbauwerks 1, das aus einem Bausatz aufgebaut ist. Das Turmbauwerk 1 weist mehrere stark konische Betonringe 2a sowie mehrere zylinderförmige Betonringe 2c auf. Weiterhin sind auf dem oberen Abschnitt 1b mehrere Stahlsegmente angeordnet, welche einen weiteren Abschnitt 1c bilden, so dass sehr große Nabenhöhen von 150 m und mehr problemlos erreicht werden können.

Figur 4 zeigt weiterhin einen Betonring 2, welcher aus zwei ringsegmentförmigen Betonfertigteilen 7 zusammengesetzt ist. Es ist hierdurch möglich, auch sehr große Betonringe 2 mit Durchmessern von beispielsweise 8 Metern herzustellen, welche dennoch auf der Straße transportierbar sind. Am Montageort des Turmbauwerks 1 werden die Betonfertigteile 7 schließlich zu einem Betonring 2 zusammengesetzt, wobei die vertikale Fuge 8 des Betonrings 2 bevorzugt trocken ausgeführt wird. Es ist jedoch auch möglich, zumindest in Teilbereichen der Fuge 8 ein Vergussmittel 9 einzusetzen.

Zur Aufnahme einer Montagehilfe zur Ausrichtung und Verbindung der Betonfertigteile 7 sind Hüllrohre 12 beispielsweise aus Polyethylen (PE) in die Betonfertigteile 7 eingegossen, wie in der schematischen Schnittdarstellung der Figur 5 dargestellt. Die Hüllrohre 12 sind hierbei von der oberen Stirnfläche der Betonfertigteile 2 bis zur unteren Stirnfläche durchgehend. Bei der Montage des Turmbauwerks 1 am vorgesehenen Standort können als Montagehilfe Ankerstangen (nicht dargestellt) in die Hüllrohre 12 eingebracht werden, welche die Ausrichtung der aufzusetzenden Betonringe 2 zum bereits bestehenden Turm 1 beim Einheben erleichtern. Nach der Montage und der Entfernung der Ankerstangen können die Hüllrohre 12 als Kanäle für Stromleitungen eingesetzt werden Stromleitungen können somit innerhalb des Turmbauwerks 1 geschützt geführt werden.

Eine weitere Ausführung der Erfindung ist in Figur 6 gezeigt. Das Turmbauwerk 1 besteht nach der vorliegenden Ausführung aus einem stark konischen Betonring 2a in dem parabelförmigen Fußabschnitt 1a. In dem oberen Abschnitt 1b beinhaltet das Turmbauwerk 1 jedoch einen zylindrischen Abschnitt 1b2, der aus mehreren zylindrischen Betonringen 2c aufgebaut ist und der zwischen zwei konischen Abschnitten 1b1 aus schwach konischen Betonfertigteilen 2b angeordnet ist. Durch die Anordnung eines oder auch mehrerer zylindrischer Abschnitte 1b2 zwischen zwei konischen Abschnitten 1b1 ist es möglich, sehr hohe Turmbauwerke 1 mit einer Nabenhöhe von bis zu 180 m aus dem gleichen Bausatz zu erstellen. Durch die eingesetzten zylindrischen Abschnitte 1b2 kann die Durchmesserabnahme in vorteilhafter Weise nach oben verlagert werden und dennoch der gleiche Bausatz mit der konstanten Anzahl schwach konischer Betonringe 2b eingesetzt werden.

Das Turmbauwerk ist wie in Figur 1 beschrieben mittels externer Spannglieder 10 verspannt. Vorliegend ist dabei ein Teil der Spannglieder 10 nur bis zu einer Teilhöhe des Turmbauwerks 1 geführt und an einem innerhalb des zylindrischen Abschnitts 1b2 angeordneten Spannstück 11 festgelegt. Ein weiterer Teil der Spannglieder 10 erstreckt sich bis zu einem zweiten Spannstück 11, welches auf dem gesamten oberen Abschnitt 1b angeordnet ist. Abweichend von der hier gezeigten Ausführung kann ein derartiges Spannstück 11 zur Zwischenabspannung natürlich auch innerhalb oder oberhalb des konischen Abschnitts 1b1 angeordnet sein. Hierdurch erhält das Turmbauwerk 1 bereits während der Montage eine hohe Stabilität und erreicht durch die zweifache Abspannung eine ausreichende erste Biegeeigenfrequenz, welche den Minimalanforderungen einer soft-soft-Auslegung genügt. Die erste Biegeeigenfrequenz des Turmbauwerks 1 liegt dabei unterhalb der Rotorfrequenz im Nennbetrieb und wird beim Einschalten des Rotors durch die Rotoranregung durchlaufen. Auf dem oberen Spannstück 11 ist nach vorliegender Ausführung ebenfalls ein weiterer Abschnitt 1c aus Stahlsegmenten angeordnet.

Figur 7 zeigt eine weitere Ausführung der Erfindung, bei welcher der Bausatz zylindrischer Betonringe 2c zumindest zweier verschiedener Durchmesser D_{z}1 und D_{z}2 beinhaltet. Durch das Vorhalten zylindrischer Betonringe 2c unterschiedlichen Durchmessers D_{z} sind zahlreiche Einflussmöglichkeiten auf die Eigenfrequenzen des Turmbauwerks 1 möglich. Beispielsweise wird wie vorliegend ein erster konischer Abschnitt 1b1 aus nur einer Teilanzahl aus dem Satz konischer Ringe 2b aufgebaut. Darauf wird ein erster zylindrischer Abschnitt 1b2 aus vorliegend zwei zylindrischen Betonringen 2c des ersten Durchmessers D_{z}1 gesetzt und anschließend wiederum ein weiterer konischer Abschnitt 1b1 aus einer weiteren Teilanzahl aus dem Satz schwach konischer Ringe 2b aufgesetzt. Schließlich wird ein weiterer zylindrischer Abschnitt 1b2 aus zylindrischen Betonringen 2c des zweiten Durchmessers D_{z}2 angeordnet und darauf die letzte Teilanzahl aus dem Satz schwach konischer Betonringe 2b.

Da mittels eines derartigen Aufbaus sehr große Höhen erreicht werden können, sind im parabelförmigen Fußabschnitt 1a vorliegend mehrere stark konische Betonringe 2a angeordnet, welche wiederum eine ausreichend hohe erste Eigenfrequenz sicherstellen. Durch das Vorsehen zylindrischer Betonringe 2c an verschiedenen Stellen in den konischen Abschnitten 1b1 aus dem Satz schwach konischer Betonringe 2b ist die Durchmesserabnahme nach oben hin gut steuerbar.

Mittels des erfindungsgemäßen Bausatzes ist das Schwingungsverhalten des Turmbauwerks 1 weitreichend einstellbar, wobei durch die Abstimmung der verschiedenen Betonringe 2a, 2b, 2c der Nachweis der Anforderungen erleichtert ist. Es wird somit durch das Vorhalten eines einziges Bausatzes eine große Flexibilität bei der Herstellung von Windkrafttürmen erreicht, wobei Türme unterschiedlichster Höhen und Auslegungskonzepte bezüglich der Eigenfrequenzanforderung erstellt werden können. Die schwach konischen Betonringe 2b weisen dabei stets eine Konizität von weniger als 2° auf, so dass sich bei Anordnung zylindrischer Betonringe 2c oder zylindrischer Abschnitte 1b2 zwischen zwei konischen Abschnitten 1b1 stets ein Knickwinkel von weniger als 2° ergibt. Ebenso weisen zwei aneinander grenzende parabelförmige Betonringe 2a, deren Durchmesser aufeinander abgestimmt sind, eine aufeinander abgestimmt Konizität auf, wonach der Unterschied der Konizität und damit der Knickwinkel zweier benachbarter Betonringe 2a stets weniger als 2° beträgt. Hierdurch ist es möglich, die Spannglieder 10 ohne das Vorsehen von aufwändigen Umlenksätteln entlang der Innenwandungen des Turmbauwerks 1 zu führen.

Die Erfindung ist nicht auf die dargestellten Ausführungsbeispiele beschränkt. Abwandlungen und Kombinationen im Rahmen der Patentansprüche fallen ebenfalls unter die Erfindung.

### Bezugszeichenliste

- 1: Turmbauwerk
- 1a: parabelförmiger Fußabschnitt
- 1b: oberer Abschnitt
- 1b1: konischer Abschnitt
- 1b2: zylindrischer Abschnitt
- 1c: Abschnitt aus Stahlsegmenten
- 2: Betonringe
- 2a: stark konischer Betonring
- 2b: schwach konischer Betonring
- 2c: zylindrischer Betonring
- 3: Fundament
- 4: Gondel
- 5: Rotorblätter
- 6: Stahlsegmente
- 7: Betonfertigteil
- 8: vertikale Fuge
- 9: Vergussmittel
- 10: Spannglieder
- 11: Spannstück
- 12: Hüllrohr
- H: Bauhöhe des Turmbauwerks
- h: Höhe der Betonringe
- D_{F}: Fußdurchmesser
- D_{z}: Durchmesser zyl. Betonring
- t: Wanddicke

## Patentansprüche

1. Verfahren zum Herstellen eines Turmbauwerks (1), vorzugsweise eines Turmbauwerks (1) einer Windkraftanlage, bei welchem in Fertigteilbauweise verschiedenartig geformte Betonringe (2) aus ringförmigen oder ringsegmentförmigen Betonfertigteilen (7) übereinander angeordnet und miteinander verbunden werden, **dadurch gekennzeichnet, dass** das Turmbauwerk (1) aus einem Bausatz aufgebaut wird, welcher drei verschiedenartig geformte Betonringe (2a, 2b, 2c) beinhaltet, wobei zunächst ein im Wesentlichen parabelförmiger Fußabschnitt (1a) aus wenigstens einem stark konischen Betonring (2a) aufgebaut wird, und wobei auf dem Fußabschnitt (1a) zumindest ein oberer Abschnitt (1b) aus einer Anzahl mehrerer schwach konischer Betonringe (2b) gleicher Konizität und unterschiedlichen Durchmessers und wenigstens einem zylindrischen Betonring (2c) aufgebaut wird, wobei die Konizität des zumindest einen stark konischen Betonrings zumindest das 1,6-fache der Konizität der schwach konischen Betonringe beträgt.

2. Verfahren nach dem vorhergehenden Anspruch, **dadurch gekennzeichnet, dass** ein erster Satz schwach konischer Betonringe (2b) gleicher Konizität und verschiedener, aufeinander abgestimmter Durchmesser, ein zweiter Satz stark konischer Betonringe (2a) verschiedener Konizitäten und verschiedener, aufeinander abgestimmter Durchmesser sowie ein dritter Satz zylindrischer Betonringe (2c) verschiedenen Durchmessers gefertigt werden und dass in Abhängigkeit von der geplanten Bauhöhe (H) und der geplanten Steifigkeit des Turmbauwerks (1) die Anzahl und/oder die Anordnung der Betonringe (2a, 2b, 2c) in jedem Abschnitt (1a, 1b), insbesondere die Anzahl und Anordnung der schwach konischen Betonringe (2b) und der zylindrischen Betonringe (2c) in dem wenigstens einen oberen Abschnitt (1b), festgelegt wird.

3. Verfahren nach einem der vorhergehenden Ansprüche, **dadurch gekennzeichnet, dass** die unterschiedlich geformten Betonringe (2a, 2b, 2c) derart aufeinander angeordnet werden, dass ein Knickwinkel zwischen zwei benachbarten Betonringen (2a, 2b, 2c) stets weniger als 2° beträgt.

4. Verfahren nach einem der vorhergehenden Ansprüche, **dadurch gekennzeichnet, dass** das Turmbauwerk (1) in dem oberen Abschnitt (1b) aus dem vollständigen Satz schwach konischer Betonringe (2b) aufgebaut wird und dass die Einstellung der Bauhöhe (H) des Turmbauwerks (1) entsprechend der geplanten Bauhöhe (H) durch die Anzahl zylindrischer Betonringe (2c) und/oder die Einstellung der Steifigkeit des Turmbauwerks (1) entsprechend der geplanten Steifigkeit durch die Anzahl und Anordnung zylindrischer Betonringe (2c) in dem oberen Abschnitt (1b) erfolgt.

5. Verfahren nach einem der vorhergehenden Ansprüche, **dadurch gekennzeichnet, dass** auf dem Fußabschnitt (1a) wenigstens ein im Wesentlichen konischer Abschnitt (1b1) aus einer Mehrzahl, insbesondere dem vollständigen Satz, schwach konischer Betonringe (2b) und wenigstens ein zylindrischer Abschnitt (1b2) aus zumindest einem zylindrischen Betonring (2c) als obere Abschnitte (1b) aufgebaut werden, wobei vorzugsweise wenigstens ein zylindrischer Abschnitt (1b2) aus wenigstens einem zylindrischen Betonring (2c) zwischen zwei konischen Abschnitten (1b1) angeordnet wird.

6. Verfahren nach einem der vorhergehenden Ansprüche, **dadurch gekennzeichnet, dass** die erste Eigenfrequenz des Turmbauwerks (1) durch die Anzahl der stark konischen Betonringe (2a) in dem Fußabschnitt (1a) entsprechend der geplanten ersten Eigenfrequenz eingestellt wird und/oder dass die zweite Eigenfrequenz des Turmbauwerks (1) durch die Anzahl und die Anordnung der zylindrischen Betonringe (2c) in dem oberen Abschnitt (1b) entsprechend der geplanten zweiten Eigenfrequenz eingestellt wird.

7. Verfahren nach einem der vorhergehenden Ansprüche, **dadurch gekennzeichnet, dass** entsprechend der gewünschten Bauhöhe (H) des Turmbauwerks (1) die Anzahl stark konischer Betonringe (2a) aus dem zweiten Satz ausgewählt und der Fußabschnitt (1a) des Turmbauwerks (1) aus dieser Anzahl aufgebaut wird.

8. Verfahren nach einem der vorhergehenden Ansprüche, **dadurch gekennzeichnet, dass** nach dem Aufbau eines zylindrischen Abschnitts (1b2) und/oder eines konischen Abschnitts (1b1) und/oder nach dem Aufbau des gesamten oberen Abschnitts (1b) jeweils ein Spannstück (11) aufgesetzt wird, und die die bereits aufgebauten Betonringe (2) durch externe Spannglieder (10) miteinander verbunden werden, wobei vorzugsweise nach dem Verbinden der Betonringe (2) ein oder mehrere rohrförmige Stahlsegmente (6) auf dem Spannstück (11) angeordnet werden.

9. Turmbauwerk (1), vorzugsweise Turmbauwerk (1) einer Windkraftanlage, welches in Fertigteilbauweise aus übereinander angeordneten und miteinander verbundenen, verschiedenartig geformten Betonringen (2) aus ringförmigen oder ringsegmentförmigen Betonfertigteilen (7) aufgebaut ist, **dadurch gekennzeichnet, dass** das Turmbauwerk (1) aus drei verschiedenartig geformten Betonringen (2a, 2b, 2c) aufgebaut ist wobei ein im Wesentlichen parabelförmiger Fußabschnitt (1a) aus zumindest einem stark konischen Betonring (2a) aufgebaut ist, und wobei auf dem Fußabschnitt (1a) zumindest ein oberer Abschnitt (1b) aus einer Anzahl mehrerer schwach konischer Betonringe (2b) gleicher Konizität und unterschiedlichen Durchmessers und wenigstens einem zylindrischen Betonring (2c) aufgebaut ist, wobei die Konizität des zumindest einen stark konischen Betonrings zumindest das 1,6-fache der Konizität der schwach konischen Betonringe beträgt.

10. Turmbauwerk nach dem vorhergehenden Anspruch, **dadurch gekennzeichnet, dass** das Turmbauwerk (1) in dem oberen Abschnitt (1b) eine feste Anzahl schwach konischer Betonringe (2b) gleicher Konizität und verschiedener, aufeinander abgestimmter Durchmesser beinhaltet und eine von der geplanten Bauhöhe (H) und der geplanten Steifigkeit des Turmbauwerks (1) abhängige Anzahl stark konischer Betonringe (2a) und zylindrischer Betonringe (2c).

11. Turmbauwerk nach einem der Ansprüche 9 - 10, **dadurch gekennzeichnet, dass** ein Knickwinkel zwischen zwei benachbarten Betonringen (2a, 2b, 2c) jeweils weniger als 2° beträgt.

12. Turmbauwerk nach einem der Ansprüche 9 - 11, **dadurch gekennzeichnet, dass** auf dem Fußabschnitt (1a) wenigstens ein im Wesentlichen konischer Abschnitt (1b1) aus der festen Anzahl schwach konischer Betonringe (2b) und wenigstens ein zylindrischer Abschnitt (1b2) aus zumindest einem zylindrischen Betonring (2c) als obere Abschnitte (1b) angeordnet sind.

13. Turmbauwerk nach einem der Ansprüche 9 - 12, **dadurch gekennzeichnet, dass** ein zylindrischer Abschnitt (1b2) aus wenigstens einem zylindrischen Betonring (2c) auf einem konischen Abschnitt (1b1) oder zwischen zwei konischen Abschnitten (1b1) angeordnet ist, wobei der konische Abschnitte (1b1) oder die konischen Abschnitte (1b1) aus der festen Anzahl schwach konischer Betonringe (2b) zusammengesetzt ist/sind.

14. Turmbauwerk nach einem der Ansprüche 9 - 13, **dadurch gekennzeichnet, dass** auf einem zylindrischen Abschnitt (1b2) und/oder einem konischen Abschnitt (1b1) und/oder dem gesamten oberen Abschnitt (1b) ein Spannstück (11) aufgesetzt ist, an welchem externe Spannglieder festgelegt sind, und dass die Betonringe (2) durch die externen Spannglieder (10) miteinander verbunden sind, wobei das Turmbauwerk (1) vorzugsweise als Hybridturm ausgebildet ist und ein oder mehrere rohrförmige Stahlsegmente (6) oberhalb des oberen Abschnitts (1b) aufweist.

15. Turmbauwerk nach einem der Ansprüche 9 - 14, **dadurch gekennzeichnet, dass** der Fußabschnitt (1a) des Turmbauwerks (1) aus mehreren stark konischen Betonringen (2a) unterschiedlicher Konizität und verschiedener, aufeinander abgestimmter Durchmesser besteht.

16. Turmbauwerk nach einem der Ansprüche 9 - 15, **dadurch gekennzeichnet, dass** die stark konischen, die schwach konischen und die zylindrischen Betonringe (2) die gleiche Höhe (h) und/oder die gleiche Wandstärke (t) aufweisen.

17. Turmbauwerk nach einem der Ansprüche 9 - 16, **dadurch gekennzeichnet, dass** zur Aufnahme von Montagehilfen in die Betonfertigteile (2) Hüllrohre (12) eingegossen sind und dass Stromleitungen innerhalb der Hüllrohre (12) durch das Turmbauwerk (1) geführt sind.

## Claims

1. A method for producing a tower structure (1), preferably a tower structure (1) of a wind power plant, variously formed concrete rings (2) made of annular or annular segment-shaped prefabricated concrete elements (7) being disposed one above the other and connected to each other in a system construction fashion, **characterized in that** the tower structure (1) is constructed from a construction set including three variously formed concrete rings (2a, 2b, 2c), wherein a substantially parabolic footer segment (1a) is first constructed from at least one strongly conical concrete ring (2a), and wherein at least one upper segment (1b) is constructed on the footer segment (1a) from a plurality of weakly conical concrete rings (2b) having identical conicity and different diameters and at least one cylindrical concrete ring (2c), wherein the conicity of the at least one strongly conical concrete ring is at least 1.6 times the conicity of the weakly conical concrete ring.

2. The method according to the preceding claim, **characterized in that** a first set of weakly conical concrete rings (2b) having identical conicity and different mutually tuned diameters, a second set of strongly conical concrete rings (2a) of different conicities and different mutually tuned diameters, and a third set of cylindrical concrete rings (2c) of different diameters are produced, and that the quantity and/or arrangement of the concrete rings (2a, 2b, 2c) in each segment (1a, 1b), particularly the quantity and arrangement of the weakly conical concrete rings (2b) and the cylindrical concrete rings (2c) in the at least one upper segment (1b), is defined as a function of the planned height (H) and planned rigidity of the tower structure (1).

3. The method according to any one of the preceding claims, **characterized in that** the variously formed concrete rings (2a, 2b, 2c) are disposed one on the other, such that an angle of inclination between two adjacent concrete rings (2a, 2b, 2c) is always less than 2°.

4. The method according to any one of the preceding claims, **characterized in that** the tower structure (1) in the upper segment (1b) is constructed from the full set of weakly conical concrete rings (2b), and that the height (H) of the tower structure (1) is set according to the planned height (H) by the quantity of cylindrical concrete rings (2c), and/or the rigidity of the tower structure (1) is set according to the planned rigidity by the quantity and arrangement of cylindrical concrete rings (2c) in the upper segment (1b).

5. The method according to any one of the preceding claims, **characterized in that** at least one substantially conical segment (1b1) is constructed on the footer segment (1a) from a plurality, particularly from the entire set, of weakly conical concrete rings (2b), and at least one cylindrical segment (1b2) is constructed as upper segments (1b) from at least one cylindrical concrete ring (2c), wherein at least one cylindrical segment (1b2) made of at least one cylindrical concrete ring (2c) is preferably disposed between two conical segments (1b1).

6. The method according to any one of the preceding claims, **characterized in that** the first natural frequency of the tower structure (1) is set according to the planned first natural frequency by the quantity of strongly conical concrete rings (2a) in the footer segment (1a), and/or that the second natural frequency of the tower structure (1) is set according to the planned second natural frequency by the quantity and arrangement of the cylindrical concrete rings (2c) in the upper segment (1b).

7. The method according to any one of the preceding claims, **characterized in that** the quantity of strongly conical concrete rings (2a) is selected from the second set according to the desired height (H) of the tower structure (1), and the footer segment (1a) of the tower structure (1) is constructed from said quantity.

8. The method according to any one of the preceding claims, **characterized in that** after constructing a cylindrical segment (1b2) and/or a conical segment (1b1), and/or after constructing the entire upper segment (1b), one clamping element (11) is placed on each, and the previously constructed concrete rings (2) are connected to each other by means of external tendons (10), wherein one or more tubular steel segments (6) are preferably disposed on the clamping element (11) after connecting the concrete rings (2).

9. A tower structure (1), preferably a tower structure (1) of a wind power plant, constructed in a system construction manner of variously formed concrete rings (2) made of annular or annular segment shaped prefabricated concrete elements (7) and disposed one above the other and connected to each other, **characterized in that** the tower structure (1) is constructed form three variously formed concrete rings (2a, 2b, 2c), wherein a substantially parabolic footer segment (1a) is constructed from at least one severely conical concrete ring (2a), and wherein at least one upper segment (1b) is constructed on the footer segment (1a) from a plurality of weakly conical concrete rings (2b) having identical conicity and different diameters and at least one cylindrical concrete ring (2c), wherein the conicity of the at least one strongly conical concrete ring is at least 1.6 times the conicity of the weakly conical concrete ring.

10. The tower structure according to the preceding claim, **characterized in that** the tower structure (1) includes in the upper segment (1b) a fixed quantity of weakly conical concrete rings (2b) of identical conicity and different, mutually tuned diameters and a quantity of strongly conical concrete rings (2a) and cylindrical concrete rings (2c) depending on the planned height (H) and the planned rigidity of the tower structure (1).

11. The tower structure according to any one of the claims 9 through 10, **characterized in that** an angle of inclination between two adjacent concrete rings (2a, 2b, 2c) is less than 2° in each case.

12. The tower structure according to any one of the claims 9 through 11, **characterized in that** at least one substantially conical segment (1b1) formed of the fixed quantity of weakly conical concrete rings (2b) is disposed on the footer segment (1a), and at least one cylindrical segment (1b2) formed of at least one cylindrical concrete ring (2c) are disposed as upper segments (1b).

13. The tower structure according to any one of the claims 9 through 12, **characterized in that** a cylindrical segment (1b2) made of at least one cylindrical concrete ring (2c) is disposed on a conical segment (1b1) or between two conical segments (1b1), wherein the conical segment (1b1) or the conical segments (1b1) is/are made of the fixed quantity of weakly conical concrete rings (2b).

14. The tower structure according to any one of the claims 9 through 13, **characterized in that** a clamping element (11) is placed on a cylindrical segment (1b2) and/or a conical segment (1b1) and/or the entire upper segment (1b), on which external tendons are secured, and that the concrete rings (2) are connected to each other by the external tendons (10), wherein the tower structure (1) is preferably implemented as a hybrid tower and has one or more tubular steel segments (6) above the upper segment (1b).

15. The tower structure according to any one of the claims 9 through 14, **characterized in that** the footer segment (1a) of the tower structure (1) consists of a plurality of strongly conical concrete rings (2a) of different conicity and different mutually tuned diameters.

16. The tower structure according to any one of the claims 9 through 15, **characterized in that** the strongly conical, the weakly conical, and the cylindrical concrete rings (2) have the same height (h) and/or the same wall thickness (t).

17. The tower structure according to any one of the claims 9 through 16, **characterized in that** cladding tubes (12) are cast into the prefabricated concrete elements (2) for receiving assembly aids and that power lines are routed through the tower structure (1) within the cladding tubes (12).

## Revendications

1. Procédé de fabrication d'un ouvrage de type tour (1), de préférence d'un ouvrage de type tour (1) d'un aérogénérateur, avec lequel des anneaux en béton (2) de différentes formes, constitués d'éléments préfabriqués en béton (7) en forme d'anneau ou en forme de segment d'anneau, sont disposés les uns au-dessus des autres et assemblés ensemble dans un mode de construction par éléments préfabriqués, **caractérisé en ce que** l'ouvrage de type tour (1) est édifié à partir d'un kit prêt à monter qui contient trois anneaux en béton (2a, 2b, 2c) de formes différentes, une portion de socle (1a) de forme sensiblement parabolique constituée d'au moins un anneau en béton fortement conique (2a) étant tout d'abord édifiée, et au moins une portion supérieure (1b), constituée d'un certain nombre d'anneaux en béton faiblement coniques (2b) de même conicité et d'au moins un anneau en béton cylindrique (2c), étant édifiée sur la portion de socle (1a), la conicité de l'au moins un anneau en béton fortement conique étant égale à au moins 1,6 fois la conicité des anneaux en béton faiblement coniques.

2. Procédé selon la revendication précédente, **caractérisé en ce qu'**un premier jeu d'anneaux en béton faiblement coniques (2b) de même conicité et de différents diamètres, assortis les uns aux autres, un deuxième jeu d'anneaux en béton fortement coniques (2a) de différentes conicités et de différents diamètres, assortis les uns aux autres, ainsi qu'un troisième jeu d'anneaux en béton cylindriques (2c) de différents diamètres sont fabriqués, et **en ce que** le nombre et/ou l'arrangement des anneaux en béton (2a, 2b, 2c) dans chaque portion (1a, 1b), notamment le nombre et l'arrangement des anneaux en béton faiblement coniques (2b) et des anneaux en béton cylindriques (2c) dans l'au moins une portion supérieure (1b), sont définis en fonction de la hauteur de construction (H) prévue et de la rigidité prévue de l'ouvrage de type tour (1).

3. Procédé selon l'une des revendications précédentes, **caractérisé en ce que** les anneaux en béton (2a, 2b, 2c) de différentes formes sont disposés les uns sur les autres de telle sorte qu'un angle de cassure entre deux anneaux en béton (2a, 2b, 2c) voisins est toujours inférieur à 2°.

4. Procédé selon l'une des revendications précédentes, **caractérisé en ce que** l'ouvrage de type tour (1) est constitué dans la portion supérieure (1b) du jeu complet d'anneaux en béton faiblement coniques (2b) et **en ce que** le réglage de la hauteur de construction (H) de l'ouvrage de type tour (1) conformément à la hauteur de construction (H) prévue est effectué par le nombre d'anneaux en béton cylindriques (2c) et/ou le réglage de la rigidité de l'ouvrage de type tour (1) conformément à la rigidité prévue est effectué par le nombre et l'arrangement des anneaux en béton cylindriques (2c) dans la portion supérieure (1b).

5. Procédé selon l'une des revendications précédentes, **caractérisé en ce qu'**au moins une portion sensiblement conique (1b1) constituée d'une pluralité, notamment du jeu complet, d'anneaux en béton faiblement coniques (2b) et au moins une portion cylindrique (1b2) constituée d'au moins un anneau en béton cylindrique (2c) sont édifiées sur la portion de socle (1a) en tant que portions supérieures (1b), au moins une portion cylindrique (1b2) constituée d'au moins un anneau en béton cylindrique (2c) étant de préférence disposée entre deux portions coniques (1b1).

6. Procédé selon l'une des revendications précédentes, **caractérisé en ce que** la première fréquence propre de l'ouvrage de type tour (1) est réglée par le nombre d'anneaux en béton fortement coniques (2a) dans la portion de socle (1a) en fonction de la première fréquence propre prévue et/ou **en ce que** la deuxième fréquence propre de l'ouvrage de type tour (1) est réglée par le nombre et l'arrangement d'anneaux en béton cylindriques (2c) dans la portion supérieure (1b) en fonction de la deuxième fréquence propre prévue.

7. Procédé selon l'une des revendications précédentes, **caractérisé en ce que** le nombre d'anneaux en béton fortement coniques (2a) du deuxième jeu est choisi en fonction de la hauteur de construction (H) souhaitée de l'ouvrage de type tour (1) et la portion de socle (1a) de l'ouvrage de type tour (1) est édifié à partir de ce nombre.

8. Procédé selon l'une des revendications précédentes, **caractérisé en ce qu'**après l'édification d'une portion cylindrique (1b2) et/ou d'une portion conique (1b1) et/ou après l'édification de la portion supérieure (1b) complète, une pièce de serrage (11) est à chaque fois déposée et les anneaux en béton (2) déjà édifiés sont assemblés ensemble par des éléments de serrage externes (10), un ou plusieurs segments en acier (6) de forme tubulaire étant de préférence disposés sur la pièce de serrage (11) après l'assemblage des anneaux en béton (2).

9. Ouvrage de type tour (1), de préférence ouvrage de type tour (1) d'un aérogénérateur, lequel est édifié dans un mode de construction par éléments préfabriqués à partir d'anneaux en béton (2) de différentes formes, constitués d'éléments préfabriqués en béton (7) en forme d'anneau ou en forme de segment d'anneau, qui sont disposés les uns au-dessus des autres et assemblés ensemble, **caractérisé en ce que** l'ouvrage de type tour (1) est édifié à partir de trois anneaux en béton (2a, 2b, 2c) de formes différentes, une portion de socle (1a) de forme sensiblement parabolique constituée d'au moins un anneau en béton fortement conique (2a) étant tout d'abord édifiée, et au moins une portion supérieure (1b), constituée d'un certain nombre d'anneaux en béton faiblement coniques (2b) de même conicité et d'au moins un anneau en béton cylindrique (2c), étant édifiée sur la portion de socle (1a), la conicité de l'au moins un anneau en béton fortement conique étant égale à au moins 1,6 fois la conicité des anneaux en béton faiblement coniques.

10. Ouvrage de type tour selon la revendication précédente, **caractérisé en ce que** l'ouvrage de type tour (1) contient dans la portion supérieure (1b) un nombre fixe d'anneaux en béton faiblement coniques (2b) de même conicité et de différents diamètres, assortis les uns aux autres, et un nombre d'anneaux en béton fortement coniques (2a) et d'anneaux en béton cylindriques (2c) dépendant de la hauteur de construction (H) prévue et de la rigidité prévue de l'ouvrage de type tour (1).

11. Ouvrage de type tour selon l'une des revendications 9 et 10, **caractérisé en ce qu'**un angle de cassure entre deux anneaux en béton (2a, 2b, 2c) voisins est à chaque fois inférieur à 2°.

12. Ouvrage de type tour selon l'une des revendications 9 à 11, **caractérisé en ce qu'**au moins une portion sensiblement conique (1b1) constituée du nombre fixe d'anneaux en béton faiblement coniques (2b) et au moins une portion cylindrique (1b2) constituée d'au moins un anneau en béton cylindrique (2c) sont disposées sur la portion de socle (1a) en tant que portions supérieures (1b).

13. Ouvrage de type tour selon l'une des revendications 9 à 12, **caractérisé en ce qu'**une portion cylindrique (1b2) constituée d'au moins un anneau en béton cylindrique (2c) est disposée sur une portion conique (1b1) ou entre deux portions coniques (1b1), la portion conique (1b1) ou les portions coniques (1b1) étant composées du nombre fixe d'anneaux en béton faiblement coniques (2b).

14. Ouvrage de type tour selon l'une des revendications 9 à 13, **caractérisé en ce qu'**une pièce de serrage (11) est déposée sur une portion cylindrique (1b2) et/ou une portion conique (1b1) et/ou la portion supérieure (1b) complète, sur laquelle sont fixés des éléments de serrage externes, et **en ce que** les anneaux en béton (2) sont assemblés ensemble par les éléments de serrage externes (10), l'ouvrage de type tour (1) étant de préférence réalisé sous la forme d'une tour hybride et possède un ou plusieurs segments en acier (6) de forme tubulaire au-dessus de la portion supérieure (1b).

15. Ouvrage de type tour selon l'une des revendications 9 à 14, **caractérisé en ce que** la portion de socle (1a) de l'ouvrage de type tour (1) se compose de plusieurs anneaux en béton de forte conicité (2a) de différentes conicités et de différents diamètres, assortis les uns aux autres.

16. Ouvrage de type tour selon l'une des revendications 9 à 15, **caractérisé en ce que** les anneaux en béton (2) fortement coniques, faiblement coniques et cylindriques possèdent la même hauteur (h) et/ou la même épaisseur de paroi (t).

17. Ouvrage de type tour selon l'une des revendications 9 à 16, **caractérisé en ce que** des tubes de gainage (12) sont enrobés dans les pièces préfabriquées en béton (2) en vue d'accueillir des accessoires de montage et ne ce que des câbles électriques passent à l'intérieur des tubes de gainage (12) à travers l'ouvrage de type tour (1).
